(19) **Europäisches Patentamt / European Patent Office / Office européen des brevets**

(11) **EP 1 547 983 B1**

(12) **EUROPEAN PATENT SPECIFICATION**

(45) Date of publication and mention
of the grant of the patent:
**10.11.2010 Bulletin 2010/45**

(51) Int Cl.:
***C03C 17/22*** *(2006.01)*     ***C03C 17/25*** *(2006.01)*

(21) Application number: **04253440.4**

(22) Date of filing: **10.06.2004**

(54) **Apatite-containing film production process**

Verfahren zur Herstellung von Apatit enthaltendem film

Procédé pour la fabrication d'un film comportant de l'apatite

(84) Designated Contracting States:
**DE FR GB**

(30) Priority: **09.12.2003 JP 2003409885**

(43) Date of publication of application:
**29.06.2005 Bulletin 2005/26**

(73) Proprietors:
• **FUJITSU LIMITED**
**Kawasaki-shi,**
**Kanagawa-Ken 211-88 (JP)**
• **TOUDAI TLO, LTD.**
**Tokyo (JP)**

(72) Inventors:
• **Watanabe, Toshiya**
**Fujisawa-shi,**
**Kanagawa 251-0037 (JP)**
• **Yoshida, Naoya**
**Ebina-shi,**
**Kanagawa 243-0405 (JP)**
• **Wakamura, Masato,**
**c/o Fujitsu Limited**
**Kawasaki-shi,**
**Kanagawa 211-8588 (JP)**

(74) Representative: **Fenlon, Christine Lesley**
**Haseltine Lake LLP**
**Lincoln House, 5th Floor**
**300 High Holborn**
**London WC1V 7JH (GB)**

(56) References cited:
**EP-A- 0 322 250**     **US-A1- 2003 219 624**

• **PATENT ABSTRACTS OF JAPAN vol. 2003, no. 10, 8 October 2003 (2003-10-08) -& JP 2003 175338 A (FUJITSU LTD), 24 June 2003 (2003-06-24)**
• **PATENT ABSTRACTS OF JAPAN vol. 2000, no. 21, 3 August 2001 (2001-08-03) -& JP 2001 097705 A (YUKEN INDUSTRY CO LTD; OKIDO MASAZUMI; ICHINO RYOICHI), 10 April 2001 (2001-04-10)**
• **PATENT ABSTRACTS OF JAPAN vol. 1999, no. 01, 29 January 1999 (1999-01-29) -& JP 10 287411 A (AGENCY OF IND SCIENCE & TECHNOL; NGK SPARK PLUG CO LTD), 27 October 1998 (1998-10-27)**
• **PATENT ABSTRACTS OF JAPAN vol. 2002, no. 02, 2 April 2002 (2002-04-02) -& JP 2001 302220 A (FUJITSU LTD; HASHIMOTO KAZUHITO; WATABE TOSHIYA), 31 October 2001 (2001-10-31)**

**Description**

The present invention relates to a process for producing an apatite-containing film having photocatalytic activity.

Recently, photocatalysts have been intensively investigated with a view to imparting antifouling, odor-masking and antibacterial properties to building materials (e.g. plate glass and tiles), electronic equipment (e.g. personal computers and cell phones), consumer electrical appliances (e.g. refrigerators and air cleaners), interior furnishings (e.g. curtains), household goods, medical tools, and the like (see K. Hashimoto and A. Fujishima, "Sanka chitan hikari shokubai no subete -- kohkin, bouo, kuhki joka no tameni -- (All About Titanium Oxide Photocatalysts -- For Antibacterial, Antifouling and Air Cleaning Purposes --)", CMC, 1988; and K. Hashimoto, "Saishin hikari shokubai gijutsu to jitsuyoka senryaku (Latest Photocatalysis Technology and Its Implementation Strategies)", BKC, 2002). Products containing photocatalysts exhibit the desired characteristics. Furthermore, they can decompose contaminants in the surrounding environment, thus contributing to environmental clean-up.

Consider, for example, personal computers and cell phones. A problem with them is that lipids, proteins and carbohydrates from hands, tobacco tar, contaminants in the atmosphere, viruses, bacteria, fungi, and the like are likely to adhere to the keyboard, mouse, buttons and casing, often impairing the appearance of the equipment. In particular, a transparent cover of a display device as a part of such equipment has a strong need for antifouling property in order to retain their light-transmitting properties. Similarly, building materials for daylight have a strong need for antifouling property in order to retain their light-transmitting properties. Attempts are therefore being made to impart antifouling and antibacterial properties by adding photocatalytic materials to those components and materials.

The photocatalytic reaction comprises a stage where the reactant is adsorbed on the catalyst; and a stage where electrons and/or holes, which are generated by light absorption of the catalyst, move to adsorbed species that then undergo reaction. Conventionally, from the viewpoint of electron and/or hole generation by absorption of light, semiconductor materials have drawn researcher's attention as photocatalytic materials. A representative material is titanium dioxide ($TiO_2$).

When a semiconductor material absorbs photons having a larger energy than its band gap, electrons in the valence band are excited to the conduction band, leaving holes in the valence band. If the generated electrons and holes move to adsorbed species, the adsorbed species are reduced and oxidized, respectively. In the case of titanium dioxide, adsorbed water is oxidized to generate hydroxyl radicals ($\cdot OH$) whereas adsorbed oxygen is reduced to generate superoxide anions ($\cdot O_2^-$). These radicals and anions in turn react with other adsorbed species and contribute to their oxidation and decomposition.

Titanium dioxide exhibits the desired characteristics in terms of electron and hole generation. However, it also has the following problems. First, among the substances that are needed to be removed by photocatalytic reaction are those which are not easily adsorbed on titanium dioxide. It is often difficult to fully remove such substances by titanium dioxide. This is why there has been a need for photocatalytic materials having high adsorbing capability.

As an additional problem, even though each of a substrate and a titanium dioxide film deposited on the substrate has a good light-transmitting property by itself, combination of the substrate and the deposited film may deteriorate transparency of the material as a whole. Such deterioration is caused by a large refractive index mismatch between the titanium dioxide film and the substrate. In the presence of such a large refractive index mismatch, light reflected on the surface of the $TiO_2$ film may disadvantageously interfere with light passing through the film to be reflected on the interface as well as light of multiple reflection, thereby producing interference fringes.

Exemplified products that are required to have good light-transmission include a protective cover of a display device and a transparent building material. In most cases, these products employ glass as the substrate. The refractive index of titanium dioxide is about three times that of glass. Therefore, in order to suppress the occurrence of interference fringes in those products, it is also desired to develop photocatalysts having refractive indices close to that of glass.

If the areas to be provided with photocatalytic activity are large, photocatalytic materials must be formed in film. It is known to form films of photocatalytic materials by physical deposition techniques such as sputtering and laser ablation, but these techniques require forming films under vacuum. They also involve difficulty in forming uniform, large-area films. A further problem is that the performance of the photocatalytic materials decreases during the process of ion collision or laser irradiation. Another known method comprises the steps of preparing a photocatalytic material, dividing it into particles, and applying them together with a binder to form a film. However, this method suffers a problem of lowered photocatalytic activity because the binder blocks the contact between the photocatalyst and the atmosphere. Hence, it is also desired to develop a simple method for preparing large-area films having good photocatalytic activity.

A Ti-containing calcium hydroxyapatite has been reported as a photocatalytic material that satisfies the requirements on adsorbing capability and refractive index (see JP 2000-327315 A). However, the apatite is rarely soluble and has great tendency to precipitate, thus presenting difficulty in controlling the reaction of the starting materials and the thickness of the formed film in the wet process. Therefore, no simple method has been reported for preparation of apatite films having photocatalytic activity and transparency.

Accordingly, it is desirable to provide a process for producing an apatite-containing film having photocatalytic activity.

As a result of intensive studies, the present inventors found that apatite-containing films having photocatalytic activity could be produced by applying an apatite-precursor composition to a substrate and drying the applied composition. Embodiments of the present invention have been accomplished on the basis of these findings. According to an embodiment of the present invention, an apatite-containing film having photocatalytic activity can be prepared at normal pressure.

According to the present invention, there is provided a process for producing an apatite-containing film having photocatalytic activity, which comprises the step of: preparing a liquid mixture comprising a Ca-containing compound, a P-containing compound and a Ti-containing compound; characterised by the further steps of: reacting the liquid mixture by agitating it or heating it to prepare an apatite-precursor composition, the reaction being selected from: a reaction in which $Ca^{2+}$ and polyphosphate ions agglomerate into fine particles which then form a sol; a reaction in which a titanium alkoxide undergoes a decomposition and/or a polycondensation to form a sol; and a reaction for forming a complex having phosphorous ligands coordinated to the Ti ion; applying the apatite-precursor composition to a substrate; and drying the applied apatite-precursor composition.

JP-2003-175338 discloses a method for forming a metal-modified apatite film having photocatalysis, in which a starting solution is applied to a substrate and then subjected to a growth reaction of the metal-modified apatite film. However, no formation of an apatite precursor is disclosed.

Desirably, in the present invention the apatite-precursor composition is in the form of a sol.

Preferably, an embodiment of the present invention further comprises the step of heating the apatite-precursor composition such that a maximum temperature is in the range of 400-800°C after the drying step.

Desirably, in an embodiment of the present invention, the following relation: $0.0001 \leq X_{Ti}/(X_{Ca} + X_{Ti}) \leq 0.15$ is satisfied, wherein $X_{Ca}$ represents the number of moles of Ca in the apatite, and $X_{Ti}$ represents the number of moles of Ti in the apatite.

Preferably, the apatite is calcium hydroxyapatite.

Desirably, the calcium hydroxyapatite contains Ti atoms occupying Ca sites.

Preferably, the substrate is made of glass.

Desirably, the apatite-containing film has an angle of contact with water within the range of 5-20°, and the change in the angle of contact with water induced by light irradiation at 1 mW/cm² for 80 hours is within 5°.

Reference will now be made, by way of example, to the accompanying drawings, in which:

Fig. 1 shows the crystal structure of calcium hydroxyapatite;
Fig. 2 is a SEM image of a cut surface of an apatite-containing film formed on a glass substrate;
Fig. 3 shows the optical characteristics of the apatite-containing film formed on a glass substrate; and
Fig. 4 shows the photocatalytic activities of the apatite-containing film formed on a glass substrate and an apatite powder.

In accordance with an embodiment of the present invention, there is provided a process for preparing an apatite-containing film having photocatalytic activity comprising the steps of preparing a liquid mixture comprising a Ca-containing compound and a P-containing compound; subjecting the liquid mixture to reaction to prepare an apatite-precursor composition; applying the apatite-precursor composition to a substrate; and drying the applied apatite-precursor composition. These steps can all be performed at normal pressure. Hence, no special equipment such as a vacuum system, is required to perform a process embodying the present invention. In addition, a large-area film can be prepared at low cost.

As used herein, the term "photocatalyst" refers to a catalyst whose activity increases under light irradiation as compared to that in the absence of irradiation. The reactants for which an apatite-containing film embodying the present invention shows catalytic activity include, without limitation, those substances which generally undergo photocatalysis, for example, the substances described in K. Hashimoto and A. Fujishima, CMC, 1988, supra, and K. Hashimoto, BKC, 2002, supra. Exemplary reactants include organics such as alcohols, aldehydes and halides; inorganics such as NOx and SOx; lipids; proteins such as albumin; viruses; bacteria; and fungi.

The expression "having photocatalytic activity" refers to the capability of working as a photocatalyst and encompasses the detection of:

i) both a significant increase in the concentration of carbon dioxide in the presence of a reactant and a significant decrease in the concentration of the reactant; and/or
ii) decomposition of a dye such as methylene blue.

Apatite refers to substances that have the same crystal structure as fluoroapatite ($Ca_{10}(PO_4)_6F_2$] and have the formula:

$$A_x(BO_y)_z X_s \cdot n(H_2O)$$

wherein A represents Ca, Ti, Sr, Ba, Pb, Na, K, Y, Ce, Co, Ni, Cu, Al, La, Cr, Fe, Mg or combinations thereof; B represents P, S, V, Si, As or combinations thereof; X represents F, Cl, OH, O or combinations thereof; y is a value determined by B; x, z and s are values determined by the valencies of A, ($BO_y$) and X, respectively; n is in the range of 0-20. All or a part of A, ($BO_y$) and X may be replaced with other ions.

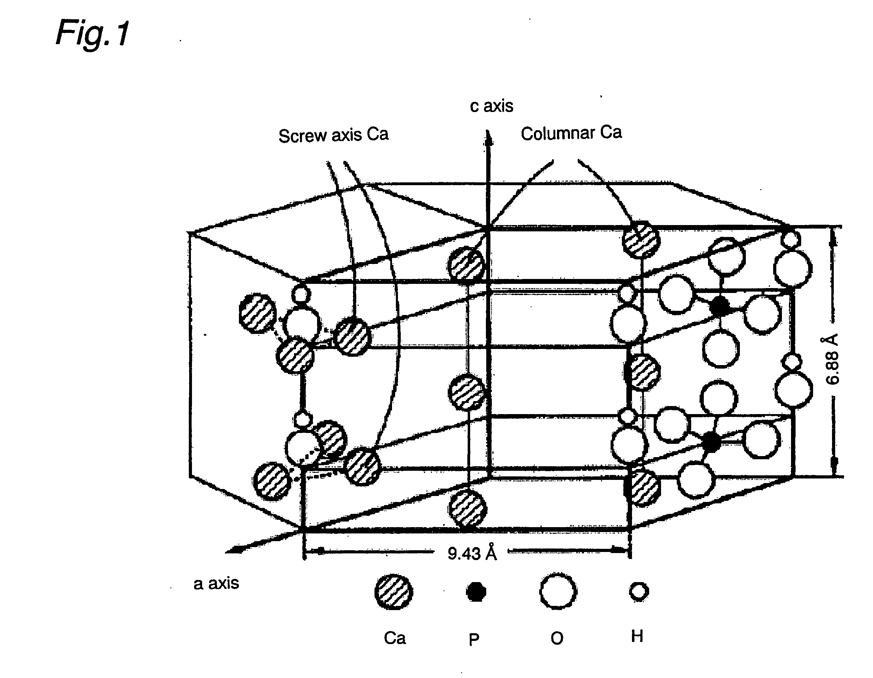

The apatite encompasses fluoroapatite, chloroapatite and hydroxyapatite. In an embodiment of the present invention, the apatite is preferably calcium hydroxyapatite. The term "calcium hydroxyapatite" (which is hereunder abbreviated as CaHAP) refers to $Ca_{10}(PO_4)_6(OH)_2$, which may have partial substitution of Ca, ($PO_4$) and/or OH. Fig. 1 shows the crystal structure of $Ca_{10}(PO_4)_6(OH)_2$.

The apatite-containing film may contain substances other than apatite. For example, it may contain calcium carbonate and calcium phosphate that have been formed as by-products. It should, however, be noted that among the components of the apatite-containing film, apatite accounts for the largest proportion by weight.

The first step in a process embodying the present invention is to prepare a liquid mixture comprising a Ca-containing compound, a P-containing compound and a Ti-containing compound. The liquid mixture may further contain a solvent. The liquid mixture is not limited to solutions and encompasses suspensions.

The Ca-containing compounds include, without limitation, complexes (e.g. calcium EDTA), calcium nitrate, calcium sulfate and calcium oxalate. The P-containing compounds include, without limitation, phosphorus pentoxide, phosphoric acid and ammonium phosphate. The solvents include, without limitation, water, alcohols (e.g. methanol, ethanol, n-propanol, isopropanol, n-butanol and t-butanol), ethers (e.g. diethyl ether, diisopropyl ether, tetrahydrofuran and dioxane), carbon halides (e.g. methylene chloride, ethylene chloride, chloroform and carbon tetrachloride), aliphatic hydrocarbons (e.g. hexane), cyclic hydrocarbons (e.g. cyclohexane), aromatic hydrocarbons (e.g. benzene, toluene and xylene), and combinations thereof.

The Ti-containing compounds include, without limitation, titanium alkoxides, titanium complexes and titanium-containing salts. Exemplary titanium alkoxides include titanium tetraisopropoxide, titanium tetra-n-butoxide, titanium tetramethoxide and titanium tetraethoxide. Exemplary titanium complexes include titanium EDTA, titanium acetylacetonato, titanium octylene glycolate, titanium tetraacetyl acetonato, titanium ethyl acetoacetate, titanium lactate and titanium triethanolaminate. Exemplary titanium-containing salts include titanium sulfate, titanium nitrate, titanium trichloride and titanium tetrachloride.

The amount of the Ti-containing compound is determined such that $X_{Ti}/(X_{Ca} + X_{Ti})$ in the apatite produced (where $X_{Ca}$ represents the number of moles of Ca in the apatite and $X_{Ti}$ represents the number of moles of Ti in the apatite) is at least 0.0001, preferably at least 0.001, and more preferably at least 0.01, but is no more than 0.15, preferably no more than 0.125. If $X_{Ti}/(X_{Ca} + X_{Ti})$ is less than 0.0001, significant photocatalytic activity may not be obtained; if $X_{Ti}/(X_{Ca} + X_{Ti})$ exceeds 0.15, an undesired phase may appear, occasionally leading to lowered photocatalytic activity. Ti atoms preferably occupy at least one type of the Ca sites, resulting in substitution of Ca atoms. However, Ti atoms may occupy other sites.

The liquid mixture may further comprise compounds containing other elements than Ca, P and Ti. For example, it may additionally comprise a F-containing compound in order to replace a part of X with F. Exemplary F-containing compounds include trifluoroacetic acid, hexafluorophosphoric acid, ammonium hexafluorophosphate and ammonium fluoride.

A pH modifier and an inhibitor for the decomposition of the Ti-containing compound, if necessary, may be added to the liquid mixture. A reaction initiator and a reaction accelerator may also be added to the liquid mixture. These reagents may be added during the step of preparing the liquid mixture or they may be added in subsequent steps.

The thus prepared liquid mixture is subjected to reaction to prepare an apatite-precursor composition. Reaction of the liquid mixture may be performed by agitating it at room temperature or by heating it appropriately. The step of preparing the liquid mixture and that of subjecting the liquid mixture to reaction may be carried out simultaneously.

The reaction of the liquid mixture means a reaction involving the Ca-containing compound, P-containing compound, Ti-containing compound, components derived from those compounds, the solvent, and combinations thereof. Examples include: a reaction in which $Ca^{2+}$ and polyphosphate ions agglomerate into fine particles which then form a sol; a reaction in which a titanium alkoxide undergoes a decomposition and/or a polycondensation to form a sol; and a reaction for forming a complex having phosphorus ligands coordinated to the Ti ion. Examples of decomposition of alkoxides include alcoholysis and hydrolysis.

The apatite-precursor refers to a substance that is generated by the reaction of the liquid mixture and is formed into the apatite by subsequent drying and/or heating. Examples include Ca-, P- and Ti-containing colloidal particles. The apatite precursor does not need to have the long-range order of the apatite structure but it preferably has the framework of the apatite structure in local domains. The apatite-precursor composition has, preferably, fluidity from the viewpoint of coating. An example of the composition having fluidity is a sol containing fine particles of the apatite precursor. By applying the precursor composition having fluidity to a substrate and producing apatite via chemical reaction on the substrate, a uniform, large-area film having the desired performance can be easily prepared.

The apatite-precursor composition can be applied by any known techniques. Examples include dip coating, spray coating, blade coating, roll coating and gravure coating.

In the step of drying the apatite-precursor composition, not only are the solvent and by-products of the reaction removed but reactions such as decomposition and polymerization are allowed to proceed further, thereby forming the apatite. If the apatite-precursor composition is a sol, it is dried into a gel that in turn forms the apatite-containing film. The drying rate is chosen as appropriate not to cause cracking in the film. The drying temperature is not limited to any particular value as long as it permits removal of the solvent; it is typically at least 80°C, preferably at least 100°C, but not be higher than 400°C, preferably not higher than 250°C.

Following the drying step, the apatite-containing film may be heated to an even higher temperature. By this heating step, the characteristics of the apatite-containing film such as crystallinity, transparency and photocatalytic activity, can be improved. A maximum temperature to be reached in the heating step is at least 400°C, preferably at least 500°C, but not be higher than 800°C, preferably not higher than 700°C. If the maximum temperature is less than 400°C, heating may often prove to be ineffective; if the maximum ultimate temperature exceeds 800°C, the substrate may sometimes be damaged. The heating step is preferably performed in an oxygen-containing atmosphere, say, in air.

The thickness of an apatite-containing film embodying the present invention is chosen as appropriate for its specific use and is at least 20 nm, preferably at least 50 nm, but not be greater than 10 $\mu$m, preferably not greater than 1 $\mu$m, more preferably not greater than 500 nm. In order to attain the desired film thickness, a cycle consisting of the coating, drying and heating steps may be repeated. If desired, a cycle consisting of the coating and drying steps may be repeated before the heating step.

Materials for the substrate on which the apatite-containing film is to be formed include, but are not limited to, glass, plastics (e.g. polyacrylate and PET), metals (e.g. aluminum, copper, zinc and nickel), graphite, concrete, nonflammables (e.g. ceramics such as plasterboard, calcium silicate board and flexible board), etc. An undercoat may be formed on the substrate before forming the apatite-containing film. From the viewpoint of light transmission, the substrate is preferably made of a material having a refractive index close to that of the apatite, as exemplified by glass. Examples of the glass include Pyrex glass, soda-lime glass and silica glass. If the drying step is followed by the additional heating step, Pyrex glass and silica glass having high heat resistance are preferred.

An embodiment of the present invention can be used to make a light-transmitting material which has a substrate and the apatite-containing film having photocatalytic activity, wherein the apatite-containing film has a light transmittance of at least 85% and a light reflectance of no more than 15% at wavelengths of 400-700 nm. The light transmittance at wavelengths of 400-700 nm refers to the average of the transmittances in the stated wavelength range. Light-transmitting materials made using an embodiment of the present invention have the light transmittance of at least 85%, preferably at least 88%. The upper limit of the light transmittance is not restricted in any way, but in order to satisfy other characteristics, it is preferably set not to exceed 99%. The light reflectance at wavelengths of 400-700 nm refers to the average of the reflectance in the stated wavelength range. The light reflectance of interest is not higher than 15%, preferably not higher than 12%, more preferably not higher than 10%. The lower limit of the light reflectance is not restricted in any way but in order to satisfy other characteristics, it is preferably set to be at least 1%. Light-transmitting materials that satisfy the above-stated conditions for light transmittance and reflectance can be prepared by the aforementioned process.

An apatite-containing film made using an embodiment of the present invention has an angle of contact with water in the range of 5-20°. This film is **characterized in that** the angle of contact with water observed after irradiation of black light at 1 mW/cm$^2$ for 80 hours differs by no more than 5° from the initial value; and that the film does not undergo photo-induced hydrophilization in contrast to titanium dioxide. These characteristics prove to be useful in applications that require stable water repellency under light irradiation.

The following examples are provided for further illustrating the present invention but is in no way to be taken as limiting.

PREPARING SUBSTRATES

Glass pieces (Corning 137 Glass) measuring 7.5 cm long, 5.5 cm wide and 1.1 mm thick were immersed in a cleaning solution that was a 5-fold dilution of Pure Soft PS (commercially available from As One Corporation). Following 30-min ultrasonication, the glass pieces were washed with distilled water and dried. The dried glass pieces were dip coated with NDH-500A (commercially available from Nippon Soda Co., Ltd.) Dip coating was performed in a nitrogen atmosphere at room temperature with the coated plates being withdrawn at a rate of 24 cm/min. Following the dip coating, each of the pieces was dried at 120°C for 40 min, and then fired at 500°C for 30 min to form a SiO$_2$ undercoat. Another cycle of dip coating, drying and firing steps was repeated. The thus obtained SiO$_2$ bearing glass pieces were used as substrates.

PRODUCING APATITE THIN FILMS

Calcium nitrate tetrahydrate [$Ca(NO_3)_2 \cdot 4H_2O$, 2.125 g] was added to 100 mL of ethanol, and the resulting mixture was stirred at room temperature until the calcium nitrate dissolved completely. To the solution, phosphorus pentoxide ($P_2O_5$, 0.4258 g) was added and the mixture was stirred for an additional 2 hours. Titanium tetraisopropoxide ($Ti[OCH(CH_3)_2]_4$, 0.2842 g) was added to the mixture to form a liquid mixture. The liquid mixture was stirred at room temperature for about 19 hours to effect reaction, thereby yielding a pale yellow sol as an apatite-precursor composition.
The sol was used for dip coating of each substrate in an area of 5 cm x 5 cm. Dip coating was performed in a nitrogen atmosphere at room temperature with the coated substrates being withdrawn at a rate of 24 cm/min. The dip-coated samples were dried at 150°C for 30 min and then fired at 600°C for 30 min in the atmosphere. The cycle of dip coating, drying and firing steps was repeated 2, 5 or 10 times. The samples prepared by passing through the respective cycles are hereunder designated 2-, 5- and 10-layered coats.

CHARACTERIZATION OF THE APATITE FILMS

Film thickness

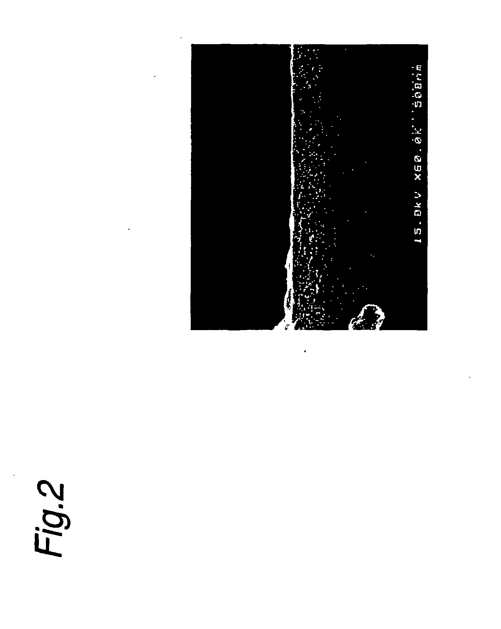

The results of scanning electron microscope observation (SEM; Hitachi S-4200) indicate that the thickness of the 2-layered coat of titanium apatite was about 200 nm (Fig. 2). It was therefore found that a thin film of about 100 nm thickness was produced by a single dip coating procedure.

Compositional analysis

Surface compositional analysis by X-ray photoelectron spectroscopy (XPS; Model 5600 of Physical Electronics) resulted in the detection of the elements Ca, Ti, P and O. The thin film spectra were similar to those of the powder, with the Ti content being about 10 mol%.

Angle of contact with water

Using a contact angle meter (DropMaster 500 of Kyowa Interface Science Co., Ltd.), the aforementioned samples were measured for the angle of contact with water both before and after light irradiation. The angle of contact with water for the samples just after their preparation was about 10°. Each sample was irradiated with black light at 1 $mW/cm^2$ (FL10BLB of Toshiba Lighting & Technology Corporation) for 80 hours and measured again for the angle of contact with water. As it turned out, no significant change in the angle of contact with water was observed even after 80-hr irradiation.

Optical measurements

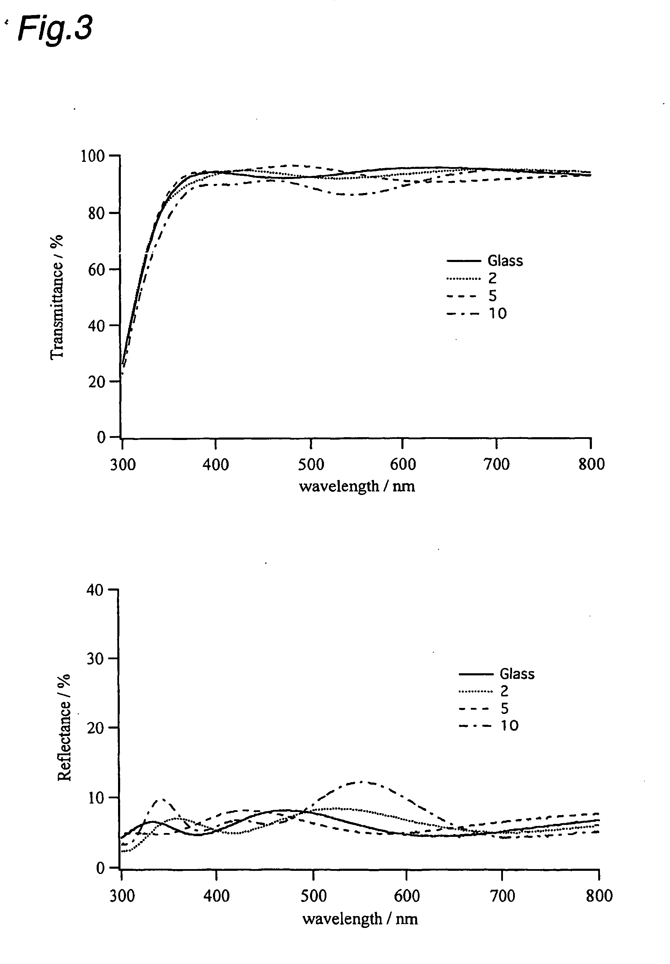

For each of the samples prepared, transmission and absorption spectra were measured using an UV-VIS spectrophotometer (Perkin-Elmer Lambda 900) and an absolute reflection measuring unit (Perkin-Elmer). See Fig. 3 for the results.
The average transmittance at wavelengths of 400-700 nm was 93% for each of the 2-layered coat, the 5-layered coat and the substrate, and 89.8% for the 10-layered coat. The average reflectance at wavelengths of 400-700 nm was 6.5% for the 2-layered coat, 6.1% for the 5-layered coat, 8.1% for the 10-layered coat, and 6.0% for the substrate. Thus, the transmittance and reflectance data on the samples were almost comparable to those on glass used as the substrate and the samples were highly transparent.

Evaluation of photocatalytic activity

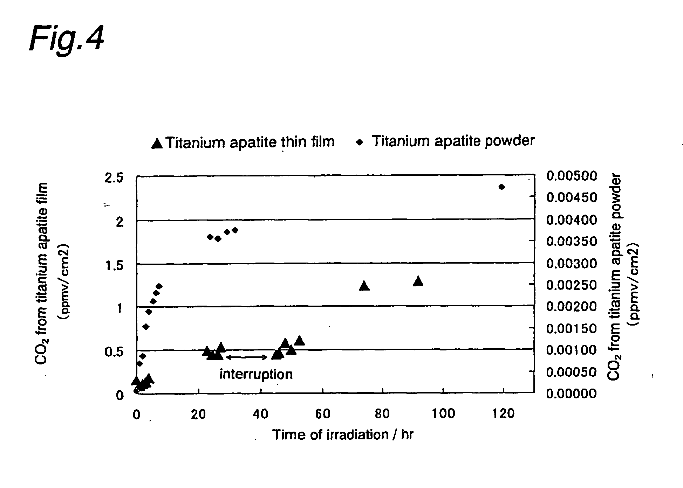

Each of the samples was placed in a closed vessel (capacity, 1 L; made of silica glass) and the interior of the vessel was replaced with synthetic air. A saturated vapor of acetaldehyde (0.5 mL) was supplied into the vessel by means of a syringe and ultraviolet light was applied (black light at 1 $mW/cm^2$; FL10BLB of Toshiba Lighting & Technology Corporation). At specified time intervals, the gas in the vessel was sampled in a volume of 1 mL by means of a syringe and subjected to gas chromatography (Shimadzu GC-8A combined with FID detector and a column packed with activated carbon and PEG-1000) for quantitative analysis of the residual acetaldehyde and the produced carbon dioxide. As it turned out, the concentration of acetaldehyde decreased and that of carbon dioxide increased, thus verifying the photocatalytic activity of the apatite-containing films.
The results of the 2-layered coat are shown in Fig. 4, as compared with the results from an apatite powder having the same composition. Whereas the apatite-containing powder was irradiated continuously, the film was shielded from light for a certain period of time as indicated in Fig. 4, thereby verifying the dependency of the catalytic activity on light. In Fig. 4, the substrate area on which the film was formed, i.e. 5 cm x 5 cm, is regarded to be the area of the film. The apatite-containing film subjected to the evaluation of photocatalytic activity had very high photocatalytic activity, and produced more than 200 ppmv/hr of carbon dioxide in a surface area of 1 $m^2$.

A process embodying the present invention provides a simple method for producing apatite-containing films having photocatalytic activity.

A process embodying the present invention can also be employed to produce electronic equipment, in particular, their display devices, keyboards, mouses and casings, as well as building materials that comprise apatite-containing films. In doing so, outstanding antifouling, odor-masking and antibacterial properties can be imparted without design limitations. It can also be applied to various uses where transparency is required, such as transparent covers of display devices and transparent building materials, in order to impart desired characteristics without impairing the transparency.

**Claims**

1.    A process for producing an apatite-containing film having photocatalytic activity, which comprises the step of:

preparing a liquid mixture comprising a Ca-containing compound, a P-containing compound and a Ti-containing compound;
**characterised by** the further steps of:

reacting the liquid mixture by agitating it or heating it to prepare an apatite-precursor composition, the reaction being selected from: a reaction in which $Ca^{2+}$ and polyphosphate ions agglomerate into fine particles which then form a sol; a reaction in which a titanium alkoxide undergoes a decomposition and/or a polycondensation to form a sol; and a reaction for forming a complex having phosphorous ligands coordinated to the Ti ion;
applying the apatite-precursor composition to a substrate; and
drying the applied apatite-precursor composition.

2.    The process according to claim 1, wherein the apatite-precursor composition is in the form of a sol.

3.    The process according to any preceding claim, which further comprises the step of heating the apatite-precursor composition such that a maximum temperature is in the range of 400-800°C after the drying step.

4.    The process according to any preceding claim, wherein the following relation:

$$0.0001 \leq X_{Ti}/(X_{Ca} + X_{Ti}) \leq 0.15$$

is satisfied,
wherein $X_{Ca}$ represents the number of moles of Ca in the apatite, and $X_{Ti}$ represents the number of moles of Ti in the apatite.

5.    The process according to any preceding claim, wherein the apatite is calcium hydroxyapatite.

6.    The process according to claim 5, wherein the calcium hydroxyapatite contains Ti atoms occupying Ca sites.

7.    The process according to any preceding claim, wherein the substrate is made of glass.

8.    The process according to any preceding claim, wherein the apatite-containing film has an angle of contact with water within the range of 5-20°, and the change in the angle of contact with water induced by light irradiation at 1 mW/cm$^2$ for 80 hours is within 5°.

**Patentansprüche**

1. Verfahren zum Erzeugen eines apatithaltigen Films mit photokatalytischcr Aktivität, das den Schritt umfasst:

    Herstellen eines flüssigen Gemischs aus einer Ca-haltigen Verbindung, einer P-haltigen Verbindung und einer Tihaltigen Verbindung;
    **dadurch gekennzeichnet, dass** es die weiteren Schritte umfasst :

    Bewirken einer Reaktion des flüssige Gemischs, indem es verrührt oder erhitzt wird, um eine Apatitvorläuferzusammensetzung herzustellen, welche Reaktion ausgewählt wird von: einer Reaktion, bei der $Ca^{2+}$- und Polyphosphationen zu feinen Partikeln agglomerieren, die dann ein Sol bilden; einer Reaktion, bei der ein Titanalkoxid eine Zersetzung und/oder eine Polykondensation erleidet, um ein Sol zu bilden; und einer Reaktion zum Bilden eines Komplexes mit Phosphorliganden, die an das Ti-Ion koordinativ gebunden sind;
    Auftragen der Apatitvorläuferzusammensetzung auf ein Substrat; und
    Trocknen der aufgetragenen Apatitvorläuferzusammensetzung.

2. Verfahren nach Anspruch 1, bei dem die Apatitvorlävferzusammensetzung in Solform ist.

3. Verfahren nach einem vorhergehenden Anspruch, ferner mit dem Schritt zum Erhitzen der Apatitvorläuferzusammensetzung, so dass eine maximale Temperatur in dem Bereich von 400-800°C liegt, nach dem Trocknungsschritt.

4. Verfahren nach einem vorhergehenden Anspruch, bei dem die folgende Beziehung erfüllt wird:

$$0,0001 \leq X_{Ti}/(X_{Ca} + X_{Ti}) \leq 0,15,$$

    wobei $X_{Ca}$ die Molzahl von Ca in dem Apatit darstellt und $X_{Ti}$ die Molzahl von Ti in dem Apatit darstellt.

5. Verfahren nach einem vorhergehenden Anspruch, bei dem das Apatit Calciumhydroxyapatit ist.

6. Verfahren nach Anspruch 5, bei dem das Calciumhydroxyapatit Ti-Atome enthält, die Ca-Plätze einnehmen.

7. Verfahren nach einem vorhergehenden Anspruch, bei dem das Substrat aus Glas ist.

8. Verfahren nach einem vorhergehenden Anspruch, bei dem der apatithaltige Film einen Kontaktwinkel mit Wasser innerhalb des Bereiches von 5-20° hat und die Veränderung des Kontaktwinkels mit Wasser, die durch 80stündige Lichteinstrahlung mit 1 mW/cm$^2$ induziert wird, innerhalb von 5° legt.


**Revendications**

1. Procédé pour produire un film contenant de l'apatite ayant une activité photocatalytique, qui comprend l'étape de :

    préparation d'un mélange liquide comprenant un composé contenant Ca, un composé contenant P et un composé contenant Ti ;
    **caractérisé par** les étapes supplémentaires de :

    réaction du mélange liquide par agitation de celui-ci ou chauffage de celui-ci pour préparer une composition de précurseur d'apatite, la réaction étant choisie parmi : une réaction dans laquelle des ions $Ca^{2+}$ et polyphosphate s'agglomèrent en fines particules qui forment ensuite un sol ; une réaction dans laquelle un alcoolate de titane subit une décomposition et/ou une polycondensation pour former un sol ; et une réaction pour former un complexe ayant des ligands phosphoreux coordonnés à l'ion Ti ;
    application de la composition de précurseur d'apatite à un substrat ; et
    séchage de la composition de précurseur d'apatite appliquée.

2. Procédé selon la revendication 1 où la composition de précurseur d'apatite est sous forme d'un sol.

**3.** Procédé selon l'une quelconque des revendications précédentes qui comprend en outre l'étape de chauffage de la composition de précurseur d'apatite de sorte qu'une température maximale est dans la plage de 400-800°C après l'étape de séchage.

**4.** Procédé selon l'une quelconque des revendications précédentes où l'équation suivante :

$$0,0001 \leq X_{Ti}/(X_{Ca} + X_{Ti}) \leq 0,15$$

est satisfaite,
où $X_{Ca}$ représente le nombre de moles de Ca dans l'apatite, et $X_{Ti}$ représente le nombre de moles de Ti dans l'apatite.

**5.** Procédé selon l'une quelconque des revendications précédentes où l'apatite est l'hydroxyapatite de calcium.

**6.** Procédé selon la revendication 5 où l'hydroxyapatite de calcium contient des atomes de Ti occupant des sites de Ca.

**7.** Procédé selon l'une quelconque des revendications précédentes où le substrat est en verre.

**8.** Procédé selon l'une quelconque des revendications précédentes où le film contenant de l'apatite a un angle de contact avec l'eau dans la plage de 5-20°, et le changement de l'angle de contact avec l'eau induit par irradiation lumineuse à 1 mW/cm$^2$ pendant 80 heures est dans des limites de 5°.

## Fig.1

c axis

Screw axis Ca          Columnar Ca

6.88 Å

9.43 Å

a axis

Ca    P    O    H

Fig.2

Fig.3

*Fig.4*

▲ Titanium apatite thin film ◆ Titanium apatite powder

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000327315 A

- JP 2003175338 A

**Non-patent literature cited in the description**

- **K. Hashimoto ; A. Fujishima.** Sanka chitan hikari shokubai no subete -- kohkin, bouo, kuhki joka no tameni -- (All About Titanium Oxide Photocatalysts -- For Antibacterial, Antifouling and Air Cleaning Purposes --). *CMC,* 1988

- **K. Hashimoto.** ''Saishin hikari shokubai gijutsu to jitsuyoka senryaku (Latest Photocatalysis Technology and Its Implementation Strategies). *BKC,* 2002
- **K. Hashimoto ; A. Fujishima.** *CMC,* 1988
- **K. Hashimoto.** *BKC,* 2002